(19) Europäisches Patentamt
European Patent Office
Office européen des brevets

(11) **EP 4 787 722 A1**

(12) **EUROPEAN PATENT APPLICATION**
published in accordance with Art. 153(4) EPC

(43) Date of publication:
**05.08.2026 Bulletin 2026/32**

(21) Application number: **23953783.0**

(22) Date of filing: **28.09.2023**

(51) International Patent Classification (IPC):
**H04B 7/0456** (2017.01)

(52) Cooperative Patent Classification (CPC):
**H04B 7/0456**

(86) International application number:
**PCT/CN2023/122938**

(87) International publication number:
**WO 2025/065639 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **1FINITY INC.
Kawasaki-shi, Kanagawa 211-8588 (JP)**

(72) Inventors:
- **CHENG, Huiting
  Kawasaki-shi Kanagawa 211--8588 (JP)**
- **ZHU, Jing
  Beijing 100022 (CN)**
- **ZHANG, Lei
  Beijing 100022 (CN)**
- **LU, Yiwen
  Beijing 100022 (CN)**

(74) Representative: **Haseltine Lake Kempner LLP
Cheapside House
138 Cheapside
London EC2V 6BJ (GB)**

(54) **INDICATION METHOD AND APPARATUS FOR CHANNEL STATE INFORMATION REPORT CONFIGURATION**

(57)   Embodiments of this disclosure provide a method and apparatus for indicating a channel state information report configuration. The method includes: receiving channel state information report configuration from a network device, the channel state information report configuration at least including a report quantity of channel state information, wherein the report quantity is not configured as cri-RI-CQI, and/or, the channel state information report configuration does not include a list of sub-configurations, and/or, the channel state information report configuration does not include non-precoding matrix indicator antenna port indication information, and/or, a sub-configuration in a list of sub-configurations in the channel state information report configuration is not configured with antenna port subset indication information, and/or, a sub-configuration in a list of sub-configurations in the channel state information report configuration is configured with antenna port subset indication information, an activated antenna port associated with the sub-configuration being associated with non-precoding matrix indicator antenna port indication information, and/or, a sub-configuration in a list of sub-configurations in the channel state information report configuration is configured with a CSI-RS resource list.

the terminal equipment receives a channel state information report configuration from a network device, the channel state information report configuration at least including a report quantity of channel state information, wherein the report quantity is not configured as cri-RI-CQI, and/or, the channel state information report configuration does not include a list of sub-configurations, and/or, the channel state information report configuration does not include non-precoding matrix indicator (non-PMI) antenna port indication information (non-PMI-PortIndication), and/or, a sub-configuration in a list of sub-configurations in the channel state information report configuration is not configured with antenna port subset indication information; and/or, a sub-configuration in a list of sub-configurations in the channel state information report configuration is configured with antenna port subset indication information, an activated antenna port associated with a sub-configuration being associated with non-precoding matrix indicator (non-PMI) antenna port indication information (non-PMI-PortIndication); and/or, a sub-configuration in a list of sub-configurations in the channel state information report configuration is configured as a CSI-RS resource list.

**Fig.2**

EP 4 787 722 A1

**Description**

Technical Field

This disclosure relates to the field of communication technologies.

Background

As an important component of global new infrastructure construction, the fifth generation (5G) communication network has experienced rapid development worldwide in recent years. With the construction of 5G, Active Antenna Units (AAUs) have been widely commercialized. Compared with the Remote Radio Units (RRUs) used in 3G and 4G, as AAUs have higher power consumption, so the energy consumption of 5G devices will also increase exponentially. 5G has defined three major business types: Enhanced Mobile Broadband (eMBB), Massive Machine Type of Communication (mMTC), and Ultra Reliable Low Latency Communication (URLLC). This has led to an increasing number of 5G small packet burst services, with base stations operating 24 hours a day without interruption. The daily energy consumption of 5G sites will also be more than twice that of 4G.

3GPP has introduced key technologies such as Massive MIMO and larger RF bandwidth in the 5G era. 5G supports higher data rates and larger data traffic, requiring more transmission bandwidth. High frequency deployment will also be the main frequency band for 5G's future expansion. The high-frequency transmission characteristics limit the coverage range of the sites, resulting in denser deployment of 5G sites, and increasing the energy consumption of the sites will bring huge operating cost pressure to operators. Therefore, network energy conservation is of great significance for saving operating costs, and 5G network energy conservation is an urgent problem to be solved.

In order to achieve energy conservation, network devices can perform energy-saving processing in the time domain, frequency domain, spatial domain, and/or energy domain according to the network load situation. For example, in the spatial and energy domains, network devices can turn off some antennas when the load is low to achieve energy conservation. In the time domain, network devices can introduce cell level discontinuous transmission/reception technology to prevent them from transmitting and/or receiving signals during certain sleep periods to achieve energy conservation.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

In related technologies, no matter uplink or downlink, signal measurement mainly refers to that a transmitting side transmits reference signals of known sequences, and a receiving side solves channels according to the received sequences. In New Radio (NR), downlink channels are generally measured via channel state information reference signals (CSI-RSs), while uplink channels are generally measured via uplink sounding reference signals (SRSs). For a TDD system, uplink sounding reference signals may be measured by taking advantage of the heterogeneity of uplink and downlink channels to obtain channel state information (CSI) of the downlink channels, that is, the network side device may obtain a precoding matrix suitable for the terminal equipment through calculation according to the CSI from the terminal equipment to the network device. After CSI-RSs transmitted by the network device are precoded as above, the terminal equipment may obtain equivalent channels from the network device to the terminal equipment according to the measurement, estimate other corresponding CSI (such as an RI and a CQI), and feed back to the network side device via a CSI report.

However, it was found by the inventor that in existing protocols, based on channel heterogeneity, although a terminal equipment may only report an RI and a CQI and does not report a precoding matrix indicator (PMI) in performing CSI report feedback, in an energy-saving scenario of dynamically adjusting the number of antennas, non-PMI CSI reporting function is not well supported. Therefore, how a network device to configure a CSI report configuration and how a terminal equipment to perform non-PMI CSI reporting in a network energy-saving scenario are current problems to be solved.

In order to solve at least one of the above problem, embodiments of this disclosure provide a method and apparatus for indicating a channel state information report configuration.

According to one aspect of the embodiments of this disclosure, there is provided an apparatus for indicating a channel state information report configuration, including:

a first receiving unit configured to receive a channel state information report configuration from a network device, the channel state information report configuration at least including a report quantity of channel state information,

wherein the report quantity is not configured as cri-RI-CQI, and/or,
the channel state information report configuration does not include non-precoding matrix indicator (non-PMI) antenna port indication information (non-PMI-PortIndication).

According to another aspect of the embodiments of this disclosure, there is provided an apparatus for indicating a channel state information report configuration, including:

a first receiving unit configured to receive a channel state information report configuration from a network device, the channel state information report configuration at least including a report quantity of channel state information;
wherein the channel state information report configuration does not include a list of sub-configurations, and/or,
a sub-configuration in a list of sub-configurations in the channel state information report configuration is not configured with antenna port subset indication information, the antenna port subset indication information being used to indicate an activated antenna port associated with the sub-configuration; and/or,
a sub-configuration in a list of sub-configurations in the channel state information report configuration is configured with antenna port subset indication information, the antenna port subset indication information being used to indicate an activated antenna port associated with the sub-configuration, an activated antenna port associated with a sub-configuration being associated with non-precoding matrix indicator (non-PMI) antenna port indication information (non-PMI-PortIndication); and/or,
a sub-configuration in a list of sub-configurations in the channel state information report configuration is configured with a CSI-RS resource list.

According to a further aspect of the embodiments of this disclosure, there is provided an apparatus for indicating a channel state information report configuration, applicable to a terminal equipment, the apparatus including:

a second transmitting unit configured to transmit a channel state information report configuration to a terminal equipment, the channel state information report configuration at least including a report quantity of channel state information,
wherein the report quantity is not configured as cri-RI-CQI, and/or,
the channel state information report configuration does not include non-precoding matrix indicator (non-PMI) antenna port indication information.

According to still another aspect of the embodiments of this disclosure, there is provided an apparatus for indicating a channel state information report configuration, including:

a second transmitting unit configured to transmit a channel state information report configuration to a terminal equipment, the channel state information report configuration at least including a report quantity of channel state information,
wherein the channel state information report configuration does not include a list of sub-configurations, and/or,
a sub-configuration in a list of sub-configurations in the channel state information report configuration is not configured with antenna port subset indication information, the antenna port subset indication information being used to indicate an activated antenna port associated with the sub-configuration; and/or,
a sub-configuration in a list of sub-configurations in the channel state information report configuration is configured with antenna port subset indication information, the antenna port subset indication information being used to indicate an activated antenna port associated with the sub-configuration, an activated antenna port associated with the sub-configuration being associated with non-precoding matrix indicator (non-PMI) antenna port indication information (non-PMI-PortIndication); and/or,
a sub-configuration in a list of sub-configurations in the channel state information report configuration is configured with a CSI-RS resource list.

According to yet another aspect of the embodiments of this disclosure, there is provided an apparatus for indicating a channel state information report configuration, including:

a first receiving unit configured to receive a channel state information report configuration from a network device, the channel state information report configuration at least including a list of sub-configurations; and
a first transmitting unit configured to calculate a CQI and/or an RI according to a first port index sequence and report the CQI and/or the RI, the first port index sequence being associated with a sub-configuration in the list of sub-configurations.

An advantage of the embodiments of this disclosure exists in that antenna ports for calculating a CQI/RI associated with a sub-configuration in the CSI report configuration are determined in the network energy-saving scenario. Thus, a non-PMI CSI reporting function in the network energy-saving scenario may be achieved; or, in the network energy-saving scenario, the network device limits the terminal equipment in performing non-PMI CSI feedback in a configuration mode of CSI report quantity, or, the non-PMI CSI feedback is inapplicable to the network energy-saving scenario, thereby ensuring that the terminal equipment normally feeds back CSI in the network energy-saving scenario.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/include/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiments of the disclosure may be combined with elements and features depicted in one or more additional drawings or embodiments. Moreover, in the drawings, like reference numerals designate corresponding parts throughout the several views and may be used to designate like or similar parts in more than one embodiment.

FIG. 1 is schematic diagram of a communication system of embodiments of this disclosure;
FIG. 2 is a schematic diagram of a method for indicating a channel state information report configuration of embodiments of this disclosure;
FIG. 3 is a schematic diagram of a method for indicating a channel state information report configuration of embodiments of this disclosure;
FIG. 4 is a schematic diagram of a method for indicating a channel state information report configuration of embodiments of this disclosure;
FIG. 5 is a schematic diagram of a method for indicating a channel state information report configuration of embodiments of this disclosure;
FIG. 6 is a schematic diagram of a capability reporting method of embodiments of this disclosure;
FIG. 7 is a schematic diagram of a method for indicating a channel state information report configuration of embodiments of this disclosure;
FIG. 8 is a schematic diagram of a method for indicating a channel state information report configuration of embodiments of this disclosure;
FIG. 9 is a schematic diagram of a capability reporting method of embodiments of this disclosure;
FIG. 10 is a schematic diagram of an apparatus for indicating a channel state information report configuration of embodiments of this disclosure;
FIG. 11 is a schematic diagram of an apparatus for indicating a channel state information report configuration of embodiments of this disclosure;
FIG. 12 is a schematic diagram of a capability reporting apparatus of embodiments of this disclosure;
FIG. 13 is a schematic diagram of an apparatus for indicating a channel state information report configuration of embodiments of this disclosure;
FIG. 14 is a schematic diagram of an apparatus for indicating a channel state information report configuration of embodiments of this disclosure;
FIG. 15 is a schematic diagram of a capability reporting apparatus of embodiments of this disclosure;
FIG. 16 is a schematic diagram of a terminal equipment of embodiments of this disclosure; and
FIG. 17 is a schematic diagram of a network device of embodiments of this disclosure.

Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G, new radio (NR) and 6G in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal equipment" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, a machine to machine (M2M) terminal, and a terminal supporting sidelink communication, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" in this text may refer to a network device, and may also refer to a terminal equipment.

Scenarios in the embodiments of this disclosure shall be described below by way of examples; however, this disclosure is not limited thereto.

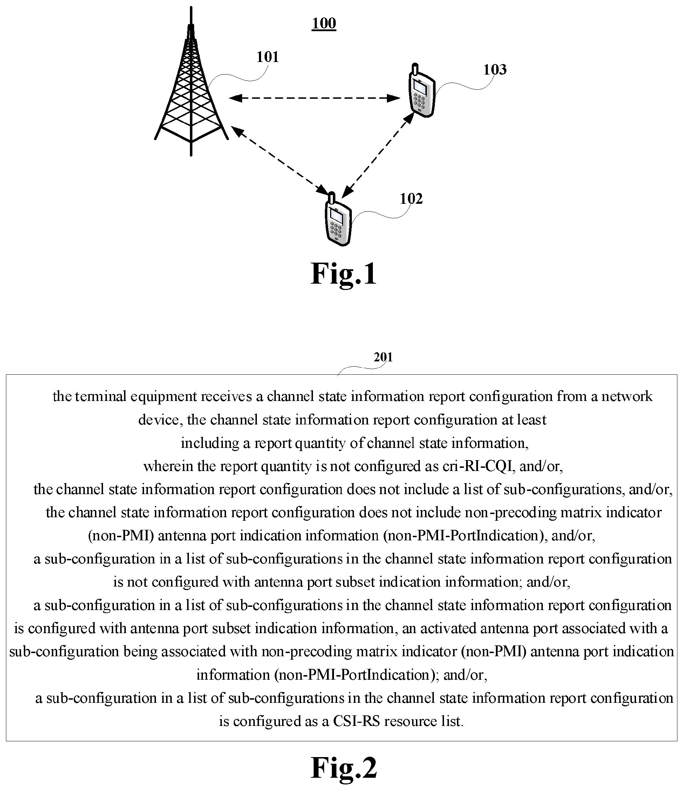

FIG. 1 is a schematic diagram of a communication system of embodiments of this disclosure, in which a case where terminal equipments and a network device are taken as examples is schematically shown. As shown in FIG. 1, the communication system 100 may include a network device 101 and terminal equipments 102, 103. For the sake of simplicity, an example having only two terminal equipments and one network device is schematically given in FIG. 1; however, the embodiments of this disclosure are not limited thereto.

In the embodiments of this disclosure, existing services or services that may be implemented in the future may be performed between the network device 101 and the terminal equipments 102, 103. For example, such services may include but not limited to an enhanced mobile broadband (eMBB), massive machine type communication (mMTC), and ultra-reliable and low-latency communication (URLLC), etc.

It should be noted that FIG. 1 shows that two terminal equipments 102, 103 are both in coverage of the network device 101. However, this disclosure is not limited thereto, and the two terminal equipments 102, 103 may not be in coverage of the network device 101, or one terminal equipment 102 is in coverage of the network device 101 and the other terminal equipment 103 is out of coverage of the network device 101.

In the embodiments of this disclosure, higher-layer signaling may be, for example, radio resource control (RRC) signaling; for example, it is referred to an RRC message, which includes an MIB, system information, and a dedicated RRC message; or, it is referred to an as an RRC information element (RRC IE). Higher-layer signaling may also be, for example, medium access control (MAC) signaling, or an MAC control element (MAC CE); however, this disclosure is not limited thereto.

In a mobile communication system, a terminal equipment typically performs channel state information (CSI) measurement according to an indication and a configuration of a network device, and reports measured CSI to the network device. In scheduling the terminal equipment, the network device may make reference to this CSI to schedule the terminal equipment to transmit in an appropriate transmission scheme on suitable physical resources. Different terminal equipments may experience different physical channel conditions, and employing a CSI feedback mechanism allows for reasonable and efficient utilization of physical resources, thereby enhancing the overall efficiency of network transmissions.

In the CSI feedback mechanism of NR, a terminal equipment measures reference signals based on CSI configurations and reports. The CSI may be composed of such report quantities as a channel quality indicator (CQI), a precoding matrix indicator (PMI), a channel measurement reference signal resource indicator (CSI-RS Resource Indicator, CRI), a synchronization signal/physical broadcast channel (SS/PBCH) resource indicator (SSBRI), a layer indicator (LI), and a rank indicator (RI), etc.

The number/type configurations of CSI report quantities is/are configured by a report quantity information element (which may be regarded as a configuration parameter, and hereinafter referred to as a report quantity) (reportQuantity) in a CSI report configuration (CSI-ReportConfig IE). The reportQuantity may be set to be "none", or "cri-RI-LI-PMI-CQI", or "ri-RI-i1", or "cri-RI-i1-CQI", or "cri-RI-CQI", or "cri-RSRP", or "cri-SINR", or "ssb-Index-RSRP", or "ssb-Index-SINR", or "cri-RI-LI-PMI-CQI", wherein,

> none: the UE does not report any CSI measurement value;
> cri-RI-LI-PMI-CQI: the UE reports a CRI, and an RI, a PMI and a CQI corresponding to the CRI;
> cri-RI-i1: the UE reports a CRI, and an i1 part of an RI and a PMI corresponding to the CRI;
> cri-RI-i1-CQI: the UE reports a CRI, an i1 part of an RI and a PMI corresponding to the CRI, and a CQI;
> cri-RI-CQI: the UE reports a CRI, an RI and CQI corresponding to the CRI;
> cri-RSRP: the UE reports a CRI and RSRP corresponding to the CRI;
> cri-SINR: the UE reports a CRI and an SINR corresponding to the CRI;
> ssb-Index-RSRP: the UE reports ssb-Index and RSRP corresponding to ssb-Index;
> ssb-Index-SINR: the UE reports ssb-Index and an SINR corresponding to ssb-Index;
> cri-RI-LI-PMI-CQI: the UE reports a CRI, and an LI, a PMI and a CQI corresponding to the CRI.

The terminal equipment receives the CSI report configuration configured by the network device, wherein when the CSI report quantity reportQauntity is configured as "cri-RI-CQI", it indicates that the UE reports the CRI and the RI and CQI corresponding to the CRI, and does not include an PMI. That is, current CSI feedback is non-PMI feedback based on a non-precoding matrix indication, the network device obtains the CSI from the terminal equipment to the network device via a uplink sounding reference signal (SRS) transmitted by the terminal equipment, and if there exists uplink and downlink channel reciprocity, the network side device may obtain the precoding matrix suitable for the terminal equipment through calculation according to the CSI from the terminal equipment to the network device. After the CSI-RSs transmitted by the network device are precoded as above, the terminal equipment may obtain equivalent channels from the network device to the terminal equipment according to measurement, estimate other corresponding CSI information, and feeds back to the network side device via a CSI report, the other CSI information including, for example, a port selection indication, an RI, and a CQI, etc. The terminal equipment may determine a CSI-RS port corresponding to channel measurement of the RI according to the non-PMI antenna port indication information (non-PMI-PortIndication) configured by the network device or a default antenna port order, and then calculate the RI and CQI, including:

for non-PMI CSI feedback, under the assumption of precoding where each rank is different, the UE performs rank adaptive CQI calculation and takes UE interference into account in the calculation to determine an optimal RI value. Assuming a CSI-RS resource of P antenna ports, their port indices are denoted as $p_i, i = 0, 1, \cdots, P-1$. When rank=v, v antenna ports are selected from the P antenna ports for transmission. non-PMI-PortIndication is used for an antenna port indication in RI/CQI calculation, and indicates v antenna ports in P antenna ports for each rank v. For each CSI-RS resource used for channel measurement, non-PMI-PortIndication may indicate v antenna ports in the P antenna ports to which v antenna ports in each rank v refer.

According to the CSI feedback framework, when the CSI report quantity reportQauntity is configured as "cri-RI-CQI", if the network device configures non-PMI-PortIndication, the network device will indicate an antenna port index for each CSI-RS resource used for channel measurement, and indicate v antenna ports for rank v in an order of layers. That is, for a CSI-RS resource, $p_0^{(1)}, p_0^{(2)}, p_1^{(2)}, p_0^{(3)}, p_1^{(3)}, p_2^{(3)}, ..., p_0^{(R)}, p_1^{(R)}, ..., p_{R-1}^{(R)}$ are configured and take them as an antenna port index indication; where, $p_0^{(v)}, ..., p_{v-1}^{(v)}$ denote antenna port indices of rank v; and if the network device does not configure port indication parameters, the terminal equipment deems by default that antenna ports of the rank v are former v antenna ports in antenna ports to which the CSI-RS resource corresponds.

In the network energy-saving scenario, in order to alleviate a problem of channel mutation caused by adjusting the number of antennas by the network device, a feasible solution is that the terminal equipment simultaneously transmits multiple CSI results, each corresponding to an antenna adjustment mode or an antenna configuration scheme, i.e. a CSI report sub-configuration, so that the network device is able to timely and accurately obtain the CSI to perform data scheduling, and antenna adjustment schemes may be recommended to the network device.

In the network energy-saving scenario, the network device may dynamically adjust the number of antennas to achieve energy saving. When the number of antennas changes, the number of CSI-RS antenna ports may possibly also change accordingly. Therefore, the v ports of rank v determined before adjusting the number of antennas by the network device may possibly not be applicable to v ports of rank v after the number of antennas is adjusted. For example, the CSI-RS resource configures 8 antenna ports, antenna ports 0-7, and before the number of antennas is adjusted, the network device indicates via non-PMI-PortIndication that 3 antenna ports to which rank 3 corresponds are antenna ports 4, 7 and 8. When the network device turns off some antennas, the CSI-RS antenna ports are also adjusted accordingly. The CSI-RS antenna ports are adjusted from antenna ports 0-7 to antenna ports 0-3, and antenna ports 7 and 8 in 3 antenna ports to which rank 3 corresponds indicated by non-PMI-PortIndication are turned off. Therefore, the 3 antenna ports of rank 3 indicated by non-PMI-PortIndication are currently unavailable.

In order to solve at least one of the problems, the embodiments of this disclosure determine antenna ports for calculating a CQI/RI associated with a sub-configuration in a CSI report configuration in a network energy-saving scenario, thereby achieving a non-PMI CSI reporting function in the network energy-saving scenario; or, in the network energy-saving scenario, the network device limits the terminal equipment in performing non-PMI CSI feedback in a configuration mode of CSI report quantity, or, the non-PMI CSI feedback is inapplicable to the network energy-saving scenario, thereby ensuring that the terminal equipment normally feeds back CSI in the network energy-saving scenario.

Following description shall be given by takings an energy-saving scenario as an example; however, this disclosure is not limited thereto, and it is applied to any scenario involving channel state information reporting.

Embodiments of a first aspect

The embodiments of this disclosure provide a method for indicating a channel state information report configuration, which shall be described from a terminal equipment side. FIG. 2 is a schematic diagram of the method for indicating a channel state information report configuration of the embodiments of this disclosure. As shown in FIG. 2, the method includes:

201: the terminal equipment receives a channel state information report configuration from a network device, the channel state information report configuration at least including a report quantity of channel state information, wherein the report quantity is not configured as cri-RI-CQI, and/or,
the channel state information report configuration does not include a list of sub-configurations, and/or,
the channel state information report configuration does not include non-precoding matrix indicator (non-PMI) antenna port indication information (non-PMI-PortIndication), and/or,
a sub-configuration in a list of sub-configurations in the channel state information report configuration is not configured with antenna port subset indication information; and/or,
a sub-configuration in a list of sub-configurations in the channel state information report configuration is configured with antenna port subset indication information, an activated antenna port associated with a sub-configuration being associated with non-precoding matrix indicator (non-PMI) antenna port indication information (non-PMI-PortIndication); and/or,
a sub-configuration in a list of sub-configurations in the channel state information report configuration is configured as a CSI-RS resource list.

It should be noted that FIG. 2 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 2.

In some embodiments, the terminal equipment may further receive a CSI-RS resource configuration. The resource configuration is a CSI-RS associated with a CSI report configuration and used for channel measurement. The resource configuration is completed via RRC layer signaling CSI-ResourceConfig. The CSI-RS resource configuration further includes an antenna port parameter (*nrOfPort*) configured for each CSI-RS resource. For example, a CSI-RS resource (with an ID of 1) configured with *nrOfPort* =8 represents 8 antenna ports, which are 0, 1, 2, 3, 4, 5, 6, and 7, and a CSI-RS resource (with an ID of 2) configured with *nrOfPort* 4 represents 4 antenna ports, which are 0, 1, 2, and 3, respectively, which shall not be enumerated herein any further.

In some embodiments, the report configuration received in 401 is completed by RRC layer signaling CSI-ReportConfig IE. Each report configuration is associated with one or more resource configurations (CSI-ResourceConfig), indicating resource configurations used for channel measurement and/or interference measurement. In addition, the report configuration further includes a codebook configuration and a report quantity, the report quantity being as described in the above embodiments. The report quantity may be set to be "none", "cri-RI-LI-PMI-CQI", "cri-RI-i1", "cri-RI-i1-CQI", "cri-RI-CQI", "cri-RSRP", "cri-SINR", "ssb-Index-RSRP", "ssb-Index-SINR", or "cri-RI-LI-PMI-CQI". The report configuration may further include indicating a CSI report type (aperiodic, periodic, semi-persistent, etc.), which shall not be enumerated herein any further. When the report quantity is configured as cri-RI-CQI, it indicates that the terminal equipment performs non-PMI CSI feedback, that is, the CSI report quantity does not include a PMI; however, the embodiments of this disclosure are not limited to such a name. When the report quantity is configured as cri-RI-CQI, the report configuration may or may not include non-PMI antenna port indication information (e.g. non-PMI-PortIndication) used to indicate antenna ports used for CQI/RI calculation. An implementation of non-PMI-PortIndication is as described above, which shall not be repeated herein any further.

In some embodiments, in order to support a network energy-saving functionality, the CSI report configuration may include a list of sub-configurations, which includes multiple sub-configurations. For example, one CSI report configuration may include one list of sub-configurations that contains L sub-configurations, wherein each sub-configuration corresponds to one piece of antenna port subset indication information or one CSI-RS resource list.

In some embodiments, the list of sub-configurations may be provided by a higher layer parameter csi-ReportSubConfigList, wherein each sub-configuration is identified by csi-ReportSubConfigID, and corresponds to one CSI-RS resource list or one CSI-RS antenna port subset, and/or corresponds to a PDSCH power offset associated with a CSI-RS.

For example, each sub-configuration may be configured with an antenna port subset by a bitmap parameter (port-subsetIndicator, hereinafter referred to as antenna port subset indication information). The bitmap includes a bit sequence $p_0, p_1, ..., p_{Pm-1}$; where, $p_0$ is an MSB, $p_{Pm-1}$ is an LSB, $p_i$ corresponds to an antenna port 3000+i, and Pm is equal to the number of ports(nrofPorts) configured for CSI-RS resources in an NZP-CSI-RS resource set used for channel measurement and associated with the CSI report configuration. Wherein, a bit of 0 in the antenna port subset indication information indicates that for this sub-configuration, a corresponding antenna port is disabled/deactivated/not triggered, and a bit of 1 in the antenna port subset indication information indicates that for this sub-configuration, a corresponding antenna port is enabled/activated/triggered. In other words, a bit of 1 in the antenna port subset indication information indicates that for this sub-configuration, the corresponding antenna port belongs to an antenna port subset associated with this sub-configuration. That is, antenna ports in the antenna port subset are activated/indicated/triggered antenna ports in antenna ports configured in the CSI-RS resource configuration for channel measurement associated with the report configuration, which are a port subset/a part of ports of the CSI-RS resources for channel measurement associated with the report configuration.

For example, one CSI-RS resource set in the resource setting of the CSI-RSs contains 8 CSI-RS resources, CSI-RS resources 0-7, each CSI-RS resource containing 32 ports, i.e. port indices 0-31. The CSI-RS resource set includes 4 sub-configurations, wherein values of all bits of a bitmap (total 32 bits) of port-subsetIndicator to which sub-configuration 0 corresponds are 1, that is, an antenna port subset to which sub-configuration 0 is related includes ports 0-31 of the CSI-RS resource, values of lower 16 bits of a bitmap (total 32 bits) of port-subsetIndicator to which sub-configuration 1 corresponds are 1 (values of other bits are 0), that is, an antenna port subset to which sub-configuration 1 is related includes ports 0-15 of the CSI-RS resource, values of lower 8 bits of a bitmap (total 32 bits) of port-subsetIndicator to which sub-configuration 2 corresponds are 1 (values of other bits are 0), that is, an antenna port subset to which sub-configuration 2 is related includes ports 0-7 of the CSI-RS resource, and values of lower 4 bits of a bitmap (total 32 bits) of port-subsetIndicator to which sub-configuration 3 corresponds are 1 (values of other bits are 0), that is, an antenna port subset to which sub-configuration 3 is related includes ports 0-3 of the CSI-RS resource.

In some embodiments, the sub-configurations may be configured with a CSI-RS resource list to indicate one or more CSI-RS resources in the CSI-RS resource set associated with the report configuration for channel measurement. CSI-RS resource lists of different sub-configurations in the list of sub-configurations may be identical or different, and the embodiments of this disclosure are not limited thereto. If a sub-configuration is not configured with a CSI-RS resource list, the sub-configuration may be associated with all CSI-RS resources in the CSI-RS resource set used for channel measurement associated with the report configuration.

In some embodiments, in order to solve a problem of non-PMI CSI reporting in a network energy-saving scenario, it is needed to limit the configuration of the report quantity in the report configuration and the list of sub-configurations.

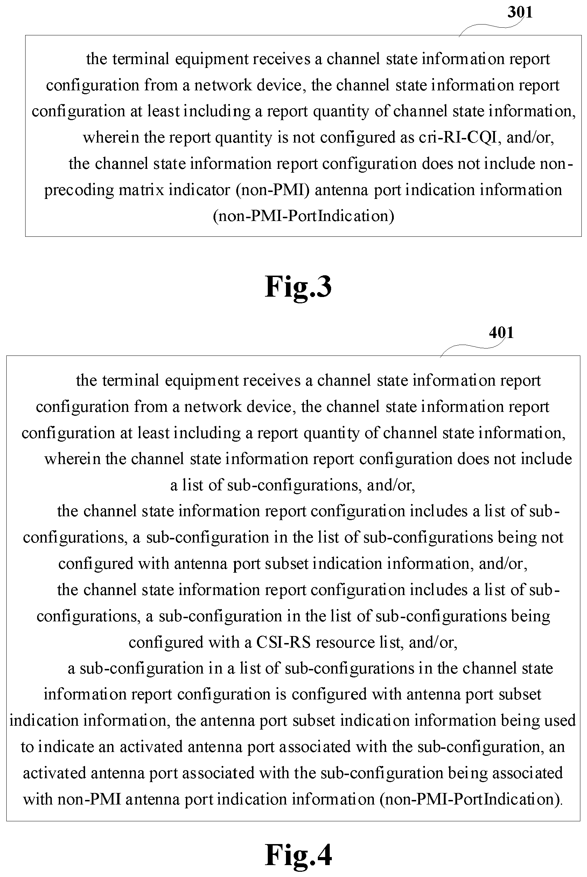

FIG. 3 is a schematic diagram of a method for indicating a channel state information report configuration of the embodiments of this disclosure. As shown in FIG. 3, the method includes:

301: the terminal equipment receives a channel state information report configuration from a network device, the channel state information report configuration at least including a report quantity of channel state information, wherein the report quantity is not configured as cri-RI-CQI, and/or,

the channel state information report configuration does not include non-precoding matrix indicator (non-PMI) antenna port indication information (non-PMI-PortIndication).

In some embodiments, the terminal receives the channel state information report configuration, wherein the channel state information report configuration includes a list of sub-configurations (i.e. supporting a network energy-saving scenario), but the report quantity is not configured as cri-RI-CQI, cri-RI-CQI representing non-PMI CSI feedback. That is, when the report configuration received by the terminal equipment includes a list of sub-configurations, the report quantity may not be configured as cri-RI-CQI, and the report quantity may be configured as a parameter other than cri-RI-CQI, or when the report configuration received by the terminal equipment includes a list of sub-configurations, the report quantity may be configured as 'cri-RI-LI-PMI-CQI 'or 'cri-RI-i1' or 'cri-RI-LI-PMI-CQI'. Or, when the report configuration received by the terminal equipment includes a list of sub-configurations, the terminal equipment does not support or does not expect non-PMI CSI feedback, or the terminal equipment does not expect that the report quantity is configured as cri-RI-CQI. Whether the sub-configurations in the list of sub-configurations are configured with antenna port subset indication information is not limited in this example, which is applicable to sub-configurations configured with antenna port subset indication information and sub-configurations configured with a CSI-RS resource list.

In some embodiments, the terminal receives the channel state information report configuration. The channel state information report configuration includes a list of sub-configurations (that is, it supports a network energy-saving scenario), but it does not include non-PMI port indication information(non-PMI-PortIndication). That is, when the report configuration received by the terminal equipment includes the list of sub-configurations, the channel state information report configuration does not include non-PMI antenna port indication information(non-PMI-PortIndication), or, when the report configuration received by the terminal equipment includes the list of sub-configurations, the terminal equipment does not support or does not expect non-PMI CSI feedback, or the terminal equipment does not expect that the channel state information report configuration includes non-PMI antenna port indication information. Whether the sub-configurations in the list of sub-configurations are configured with antenna port subset indication information is not limited in this example, which is applicable to sub-configurations configured with antenna port subset indication information and sub-configurations configured with a CSI-RS resource list.

The above two implementations may be performed simultaneously, or may be performed independently, and this disclosure is not limited thereto.

In some embodiments, the terminal receives the channel state information report configuration. The channel state information report configuration includes one list of sub-configurations (that is, it supports a network energy-saving scenario), wherein each sub-configuration in the list of sub-configurations corresponds to bitmap-based antenna port subset indication information, and the report quantity is not configured as cri-RI-CQI. That is, when the report configuration received by the terminal equipment includes one list of sub-configurations and each sub-configuration in the list of sub-configurations corresponds to one piece of bitmap-based antenna port subset indication information, the report quantity may not be configured as cri-RI-CQI, that is, the report quantity may be configured as a parameter other than cri-RI-CQI. Or, when the report configuration received by the terminal equipment includes a list of sub-configurations and each sub-configuration in the list of sub-configurations corresponds to one piece of bitmap-based antenna port subset indication information, the report quantity is configured as 'cri-RI-LI-PMI-CQI' or 'cri-RI-i1' or 'cri-RI-i1-CQI' or cri-RI-LI-PMI-CQI'. Or, in other words, when the report configuration received by the terminal equipment includes one list of sub-configurations and one sub-configuration in the list of sub-configurations corresponds to one piece of antenna port subset indication information, the terminal equipment does not support or does not expect non-PMI CSI feedback, or the terminal equipment does not expect that the report quantity is configured as cri-RI-CQI.

In some embodiments, the terminal receives the channel state information report configuration. The channel state information report configuration includes one list of sub-configurations (that is, it supports a network energy-saving scenario), wherein each sub-configuration in the list of sub-configurations corresponds to one bitmap-based antenna port subset indication information, and the channel state information report configuration does not include non-PMI antenna port indication information. That is, when the report configuration received by the terminal equipment includes one list of sub-configurations and each sub-configuration in the list of sub-configurations corresponds to one piece of bitmap-based antenna port subset indication information, the channel state information report configuration does not include non-PMI antenna port indication information, or, when the report configuration received by the terminal equipment includes one list of sub-configurations and one sub-configuration in the list of sub-configurations corresponds to one piece of antenna port subset indication information, the terminal equipment does not support or does not expect non-PMI CSI feedback, or the terminal equipment does not expect that the channel state information report configuration includes non-PMI antenna port indication information.

The above two implementations may be performed simultaneously, or may be performed independently, and this disclosure is not limited thereto.

In some embodiments, in order to solve a problem of non-PMI CSI reporting in a network energy-saving scenario, it is needed to limit the configuration of the report quantity in the report configuration and the list of sub-configurations.

FIG. 4 is another schematic diagram of the method for indicating a channel state information report configuration of the embodiments of this disclosure. As shown in FIG. 4, the method includes:

> 401: the terminal equipment receives a channel state information report configuration from a network device, the channel state information report configuration at least including a report quantity of channel state information, wherein the channel state information report configuration does not include a list of sub-configurations, and/or,
> the channel state information report configuration includes a list of sub-configurations, a sub-configuration in the list of sub-configurations being not configured with antenna port subset indication information, and/or,
> the channel state information report configuration includes a list of sub-configurations, a sub-configuration in the list of sub-configurations being configured with a CSI-RS resource list, and/or,
> a sub-configuration in a list of sub-configurations in the channel state information report configuration is configured with antenna port subset indication information, the antenna port subset indication information being used to indicate an activated antenna port associated with the sub-configuration, an activated antenna port associated with the sub-configuration being associated with non-PMI antenna port indication information (non-PMI-PortIndication).

In some embodiments, the terminal receives the channel state information report configuration, and the report quantity of the channel state information report configuration is configured as cri-RI-CQI, cri-RI-CQI representing non-PMI CSI feedback, and the channel state information report configuration does not include the list of sub-configurations (that is, it does not support a network energy-saving scenario). Or, when the report quantity of the channel state information report configuration is set to be cri-RI-CQI, the channel state information report configuration does not include the list of sub-configurations. Or, when the report quantity is set to be cri-RI-CQI, the terminal equipment does not expect that the channel state information report configuration further includes the list of sub-configurations. The report configuration in this example does not include the list of sub-configurations, hence, there is no need to restrict whether the sub-configurations in the list of sub-configurations are configured with antenna port subset indication information.

In some embodiments, the channel state information report configuration further includes the non-PMI antenna port indication information (equivalent to non-PMI CSI feedback), and does not include the list of sub-configurations (that is, it does not support a network energy-saving scenario). Or, when the channel state information report configuration further includes the non-PMI antenna port indication information, the channel state information report configuration does not include the list of sub-configurations, or when the channel state information report configuration further includes the non-PMI antenna port indication information, the terminal equipment does not expect that the channel state information report configuration further includes the list of sub-configurations.

The above two implementations may be performed simultaneously, or may be performed independently, and this disclosure is not limited thereto.

In some embodiments, the terminal receives the channel state information report configuration, and the report quantity is configured as cri-RI-CQI (equivalent to non-PMI CSI feedback). The channel state information report configuration does not include the list of sub-configurations (that is, it does not support a network energy-saving scenario), and each sub-configuration in the list of sub-configurations corresponds to one piece of bitmap-based antenna port subset indication information. Or, when the report quantity is configured as cri-RI-CQI, the channel state information report configuration does not include the list of sub-configurations, and each sub-configuration in the list of sub-configurations corresponds to one piece of bitmap-based antenna port subset indication information. Or, when the report quantity is configured as cri-RI-CQI, the terminal equipment does not expect that the channel state information report configuration further includes the list of sub-configurations, wherein each sub-configuration in the list of sub-configurations is configured with one piece of bitmap-based antenna port subset indication information.

In some embodiments, the channel state information report configuration further includes the non-PMI antenna port indication information (equivalent to non-PMI CSI feedback), the channel state information report configuration does not include the list of sub-configurations (that is, it does not support a network energy-saving scenario), and each sub-configuration in the list of sub-configurations corresponds to one piece of bitmap-based antenna port subset indication information. Or, when the channel state information report configuration further includes the non-PMI antenna port indication information, the channel state information report configuration does not include the list of sub-configurations, and each sub-configuration in the list of sub-configurations corresponds to one piece of bitmap-based antenna port subset indication information. Or, when the channel state information report configuration further includes the non-PMI antenna port indication information, the terminal equipment does not expect that the channel state information report configuration further includes the list of sub-configurations, wherein each sub-configuration in the list of sub-configurations is configured with one piece of bitmap-based antenna port subset indication information.

The above two implementations may be performed simultaneously, or may be performed independently, and this disclosure is not limited thereto.

In some embodiments, the report quantity is configured as cri-RI-CQI (equivalent to non-PMI CSI feedback), and the channel state information report configuration further includes one list of sub-configurations, but the sub-configurations in the list of sub-configurations in the channel state information report configuration are not configured with bitmap-based antenna port subset indication information. Or, the report quantity is configured as cri-RI-CQI (equivalent to non-PMI CSI feedback), and the channel state information report configuration further includes one list of sub-configurations, but the sub-configurations in the list of sub-configurations in the channel state information report configuration are configured with a CSI-RS resource list. Or, when the report quantity is configured as cri-RI-CQI and the channel state information report configuration further includes one list of sub-configurations, the sub-configurations in the list of sub-configurations in the channel state information report configuration are not configured with bitmap-based antenna port subset indication information. Or, when the report quantity is configured as cri-RI-CQI and the channel state information report configuration further includes a list of sub-configurations, the terminal equipment does not expect that the sub-configurations in the list of sub-configurations are configured with bitmap-based antenna port subset indication information; or, when the report quantity is configured as cri-RI-CQI and the channel state information report configuration further includes a list of sub-configurations, the terminal equipment expects that the sub-configurations in the list of sub-configurations are configured with a CSI-RS resource list.

In some embodiments, the channel state information report configuration further includes the non-PMI antenna port indication information and one list of sub-configurations, but the sub-configurations in the list of sub-configurations in the channel state information report configuration are not configured with bitmap-based antenna port subset indication information. Or, the channel state information report configuration further includes the non-PMI antenna port indication information and one list of sub-configurations, but the sub-configurations in the list of sub-configurations in the channel state information report configuration are configured as a CSI-RS resource list. Or, when the channel state information report configuration further includes the non-PMI antenna port indication information and one list of sub-configurations, the sub-configurations in the list of sub-configurations in the channel state information report configuration are not configured with bitmap-based antenna port subset indication information. Or, when the channel state information report configuration further includes the non-PMI antenna port indication information and one list of sub-configurations, the terminal equipment does not expect that the sub-configurations in the list of sub-configurations are configured with bitmap-based antenna port subset indication information. Or, when the channel state information report configuration further includes the non-PMI antenna port indication information and one list of sub-configurations, the terminal equipment expects that the sub-configurations in the list of sub-configurations are configured with a CSI-RS resource list.

The above two implementations may be performed simultaneously, or may be performed independently, and this disclosure is not limited thereto.

In some embodiments, the terminal receives the channel state information report configuration, the report quantity in the channel state information report configuration is configured as cri-RI-CQI (equivalent to non-PMI CSI feedback), and the channel state information report configuration further includes one list of sub-configurations, the sub-configurations in the list of sub-configurations in the channel state information report configuration are configured bitmap-based antenna port subset indication information, and activated antenna ports associated with the sub-configurations are associated with/in consistence with non-PMI antenna port indication information (non-PMI-PortIndication). Or, when the report quantity is configured as cri-RI-CQI and the channel state information report configuration further includes one list of sub-configurations, the sub-configurations in the list of sub-configurations in the channel state information report configuration are configured bitmap-based antenna port subset indication information, and activated ports to which sub-configurations of the terminal equipment correspond are associated with/in consistence with non-PMI antenna port indication information (non-PMI-PortIndication).

In some embodiments, the channel state information report configuration further includes the non-PMI antenna port indication information and one list of sub-configurations, but the sub-configurations in the list of sub-configurations in the channel state information report configuration are configured bitmap-based antenna port subset indication information, and the activated antenna ports associated with the sub-configurations are associated with/in consistence with the non-PMI antenna port indication information. Or, when the channel state information report configuration further includes the non-PMI antenna port indication information and one list of sub-configurations, the sub-configurations in the list of sub-configurations in the channel state information report configuration are configured bitmap-based antenna port subset indication information, and the activated ports corresponding to the sub-configurations are associated with/in consistence with the non-PMI antenna port indication information.

In the above example, that the activated antenna ports associated with the sub-configuration are associated with the non-PMI port indication information indicates that N activated antenna ports associated with the sub-configuration, or N antenna ports in the antenna port subset associated with the sub-configuration (assuming that the sub-configuration correspond to N activated ports) should be in consistence with ports indicated by rank N in the non-PMI port indication information (non-PMI-PortIndication), wherein the consistence refers to that numbers and indices are all in consistence. For example, if the number of activated ports in sub-configuration 1 to which CSI-RS 0 corresponds is 4, 4 activated ports of sub-configuration 1 are in consistence with the 4 ports of rank 4 for CSI-RS 0 in non-PMI-PortIndication.

The above two implementations may be performed simultaneously, or may be performed independently, and this disclosure is not limited thereto

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiment that in the network energy-saving scenario, the network device limits the terminal equipment in performing non-PMI CSI feedback in a configuration mode of CSI report quantity, or, the non-PMI CSI feedback is inapplicable to the network energy-saving scenario (is configured with the list of sub-configurations or the sub-configurations are configured with antenna port subset indication information), thereby ensuring that the terminal equipment normally feeds back CSI in the network energy-saving scenario.

Embodiments of a second aspect

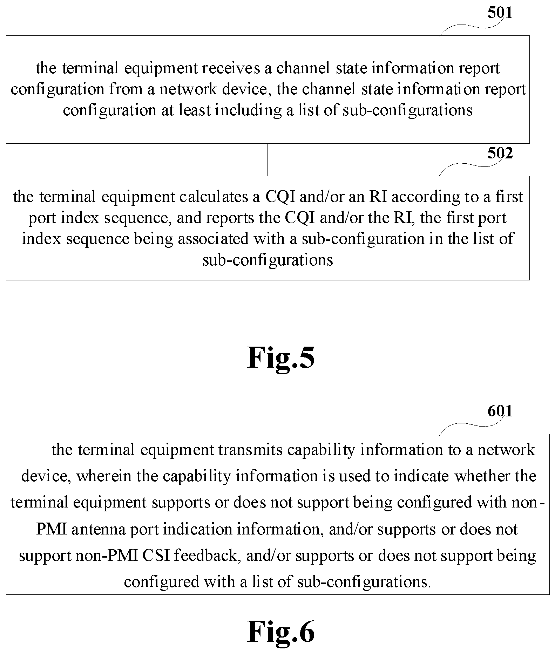

The embodiments of this disclosure provide a method for indicating a channel state information report configuration, which shall be described from a terminal equipment side. The embodiments differ from the embodiments of the first aspect in that in the embodiments, performing non-PMI CSI feedback by the terminal equipment is supported in a network energy-saving scenario. How to support performing non-PMI CSI feedback by the terminal equipment in a network energy-saving scenario shall be described below with reference to FIG. 5. FIG. 5 is a schematic diagram of the method for indicating a channel state information report configuration of the embodiments of this disclosure. As shown in FIG. 5, the method includes:

> 501: the terminal equipment receives a channel state information report configuration from a network device, the channel state information report configuration at least including a list of sub-configurations; and
> 502: the terminal equipment calculates a CQI and/or an RI according to a first port index sequence, and reports the CQI and/or the RI, the first port index sequence being associated with a sub-configuration in the list of sub-configurations.

In some embodiments, the terminal receives the channel state information report configuration, and the channel state information report configuration includes a report quantity, the report quantity being configured as cri-RI-CQI. The report configuration further includes one list of sub-configurations, each sub-configuration in the list of sub-configurations corresponding to one piece of bitmap-based antenna port subset indication information. Reference may be made to the embodiments of the first aspect for implementations of the report quantity, the sub-configuration and how the antenna port subset indication information indicates the antenna port subset, which shall not be repeated herein any further.

In some embodiments, the terminal equipment further receives a CSI-RS resource configuration for channel measurement associated with the channel state information report configuration. Reference may be made to the embodiments of the first aspect for an implementation of the CSI-RS resource configuration, which shall not be repeated herein any further.

How the first port index sequence indicates and/or assumes when the report quantity of the report configuration is configured as cri-RI-CQI, the report configuration includes one list of sub-configurations, and each sub-configuration in the list of sub-configurations corresponds to one piece of bitmap-based antenna port subset indication information is described in the embodiments of this disclosure, which shall be further described below in detail.

In some embodiments, the first port index sequence is associated with a sub-configuration in the list of sub-configurations, and for each sub-configuration associated with each CSI-RS used for channel measurement associated with the CSI report configuration, the first port index sequence associated with the sub-configuration at least contains v antenna port index/indices of a rank v; where, v is a positive integer greater than 0, its values include {1, 2,..., P}, and a maximum value P of v is a total number of antenna ports in the antenna port subset associated with the sub-configuration. That is, the first port index sequence associated with the sub-configuration includes an antenna port index of a rank 1, 2 antenna port indices of a rank 2, ... P antenna port indices $p_0^{(1)}, p_0^{(2)}, p_1^{(2)}, p_0^{(3)}, p_1^{(3)}, p_2^{(3)},..., p_0^{(P)}, p_1^{(P)},..., p_{P-1}^{(P)}$ of a rank P.

In some embodiments, the first port index sequence may be indicated by RRC signaling and/or assumed in a predefined manner, which shall be described below respectively.

In some embodiments, the first port index sequence may be indicated by RRC signaling, the RRC signaling including first indication information. The first indication information is associated with a sub-configuration, and is used to indicate that v antenna port(s) in the antenna port subset associated with the sub-configuration serve(s) as the v antenna port(s) of a rank v in the first port index sequence. Reference may be made to the embodiments of the first aspect for the antenna port subset.

In some embodiments, the first indication information may be a newly-added information element in the report configuration, such as non-PMI-PortIndication-r19 or non-PMI-PortIndication-Es, or may reuse an existing information element non-PMI-PortIndication in the report configuration. However, the embodiments of this disclosure are not limited thereto, and the first indication information may not be carried by the report configuration, which shall not be illustrated herein any further.

In some embodiments, the first indication information is an indication parameter list, wherein the number of indication parameters in the list is associated with the number (maxNrofNZP-CSI-RS-ResourcesPerConfig) of NZP-CSI-RS resources in the CSI report configuration used for channel measurement and the number (maxNrofSubConfiPer-Config) of the sub-configurations in the CSI report configuration. For example, the number of indication parameters in the list is equal to maxNrofSubConfiPerConfig×maxNrofNZP-CSI-RS-ResourcesPerConfig, and the number of indication parameters in the list may be denoted by a new IE, and the embodiments of this disclosure are not limited thereto.

In some embodiments, the first indication information is used to indicate antenna ports used for CQI/RI calculation. For each sub-configuration (csi-ReportSubConfig) associated with each CSI-RS resource used for channel measurement that is first associated with the CSI report configuration, for each rank R, the first indication information indicates which R antenna ports are used. One indication parameter corresponds to one sub-configuration associated with one CSI-RS resource used for channel measurement associated with the channel state information report configuration, the multiple indication parameters are first arranged in an ascending order of CSI-RS resource indices and multiple indication parameters corresponding to the same CSI-RS resource, and are then arranged in an ascending order of sub-configuration indices.

For example, a first one of indication parameters in the first indication information corresponds to a first one of sub-configurations associated with a first one of NZP CSI-RS resources in a first one of resource sets in a resource list in a resource configuration, a second one of indication parameters in the first indication information corresponds to a second one of sub-configurations associated with the first one of NZP CSI-RS resources in the first one of resource sets in the resource list in the resource configuration, and so on, until a next one of indication parameters in the first indication information corresponds to a last one of sub-configuration (csi-ReportSubConfig) associated with the first one of NZP CSI-RS resources in the first one of resource sets in the resource list. Then, a next one of indication parameters in the first indication information corresponds to a first one of sub-configurations associated with a second one of NZP CSI-RS resources in the first one of resource sets in the resource list in the resource configuration, and so on, until a next one of indication parameters in the first indication information corresponds to a last one of sub-configurations associated with a last one of NZP CSI-RS resources in the first one of resource sets. Thereafter, a next one of indication parameters in the first indication information corresponds to a first one of sub-configurations associated with a first one of NZP CSI-RS resources in a second one of resource sets in the resource list in the resource configuration, and so on, until a next one of indication parameters in the first indication information corresponds to a last one of sub-configurations associated with a last one of NZP CSI-RS resources in a last one of resource sets.

For example, the CSI-RS resource configuration includes a CSI-RS resource set, the CSI-RS resource set including 4 CSI-RS resources 0-3. In addition, the list of sub-configurations includes 2 sub-configurations, sub-configuration 0 and sub-configuration 1. The first indication information includes 8 indication parameters, wherein a first one of indication parameters corresponds to sub-configuration 0 associated with CSI-RS resource 0 in the CSI-RS resource set, a second one of indication parameters corresponds to sub-configuration 1 associated with CSI-RS resource 0 in the CSI-RS resource set, a third one of indication parameters corresponds to sub-configuration 0 associated with CSI-RS resource 1 in the CSI-RS resource set, a fourth one of indication parameters corresponds to sub-configuration 1 associated with CSI-RS resource 1 in the CSI-RS resource set, a fifth one of indication parameters corresponds to sub-configuration 0 associated with CSI-RS resource 2 in the CSI-RS resource set, a sixth one of indication parameters corresponds to sub-configuration 1 associated with CSI-RS resource set resource 2 in the CSI-RS resource set, a seventh one of indication parameters corresponds to sub-configuration 0 associated with CSI-RS resource 3 in the CSI-RS resource set, and an eighth one of indication parameters corresponds to sub-configuration 1 associated with a CSI-RS resource in the CSI-RS resource set.

In some embodiments, for each indication parameter, v antenna port(s) in an antenna port subset associated with a corresponding sub-configuration are indicated as the v antenna port(s) of a rank v in the first port index sequence associated with the sub-configuration. The indication parameter includes one or more antenna port indices (a second port index sequence) corresponding respectively to R ranks, the one or more antenna port indices (indicated v antenna port(s)) corresponding to R ranks being arranged in an ascending order of a rank v, for example, v=1,2,3... That is, the indication parameter includes R groups of antenna port indices, wherein a *v-th* group in the R groups of antenna port indices corresponds to v port(s) of a rank with a value of v, and the v port(s) of a rank v is/are used to calculate an RI and CQI of the rank with a value of v.

For example, one indication parameter includes a second port index sequence

$$p_0^{(1)}, p_0^{(2)}, p_1^{(2)}, p_0^{(3)}, p_1^{(3)}, p_2^{(3)}, ..., p_0^{(R)}, p_1^{(R)}, ..., p_{R-1}^{(R)}$$ ; where, $p_0^{(v)}, ..., p_{v-1}^{(v)}$ are a group of antenna ports associated with a rank v, a value of R is from {1, 2,... P}, $P \in \{1,2,4,8\}$, and P is the number of antenna ports in an antenna port subset associated with a corresponding sub-configuration, that is, P is equal to the number of activated/indicated/enabled antenna ports in the antenna port subset indication information associated with the sub-configuration, or is equal to the number of bits with a bit value of 1 in the antenna port subset indication information bitmap associated with the sub-configuration.

For example, one indication parameter corresponds to sub-configuration 1 associated with CSI-RS resource 0 in the CSI-RS resource set. For this indication parameter, $$p_0^{(1)}, p_0^{(2)}, p_1^{(2)}, p_0^{(3)}, p_1^{(3)}, p_2^{(3)}, ..., p_0^{(R)}, p_1^{(R)}, ..., p_{R-1}^{(R)}$$ ; where, a value of R is from {1, 2,... P}, $P \in \{1,2,4,8\}$, P is the number of antenna ports in an antenna port subset associated with corresponding sub-configuration 1. According to this indication parameter, v antenna port(s) $p_0^{(v)}, ..., p_{v-1}^{(v)}$ in the antenna port subset associated with sub-configuration 1 may be determined as v antenna port(s) of a rank v in the first port index sequence associated with sub-configuration 1.

In some embodiments, the v antenna port(s) of a rank v in the first port index sequence are assumed in a predefined manner to be former v antenna port(s) with port indices arranged from small to large in the antenna port subset associated with the sub-configuration. In this predefined manner, the network device does not transmit the first indication information, that is, the terminal equipment is not configured with the above RRC signaling (the first indication information). For sub-configuration 1 of the CSI-RS resources associated with the report configuration, the terminal equipment assumes that the v antenna port(s) $p_0^{(v)}, ..., p_{v-1}^{(v)}$ of a rank v in the first port index sequence associated with sub-configuration 1 is/are former v antenna port(s) with port indices arranged from small to large in the antenna port subset associated with sub-configuration 1, which are associated with rank $v$ =1,2,...,P, $P \in \{1,2,4,8\}$; where, P is the number of antenna ports in the antenna port subset associated with the corresponding sub-configuration, that is, P is equal to the number of activated/indicated/enabled antenna ports in the antenna port subset indication information associated with the sub-configuration, or is equal to the number of bits with a bit value of 1 in the antenna port subset indication information bitmap associated with the sub-configuration. $$p_0^{(v)}, ..., p_{v-1}^{(v)} = \{0, ..., v-1\}$$ ; where, 0 denotes a first one of indicated/activated antenna ports or an antenna port corresponding to a first bit set to be 1 in the antenna port subset indication information bitmap associated with sub-configuration 1, 1 denotes a second one of indicated/activated antenna ports or an antenna port corresponding to a second bit set to be 1 in the antenna port subset indication information bitmap associated with sub-configuration 1, and so on, and v-1 denotes a *v-th* one of indicated/activated ports or an antenna port corresponding to a v-*th* bit set to be 1 in the antenna port subset indication information bitmap associated with sub-configuration 1.

In some embodiments, in 503, in calculating a CQI of one rank v, the UE will use v antenna port(s) of a rank v in a first port index sequence associated with a selected sub-configuration of a selected CSI-RS resource to calculate the CQI.

Meanwhile, a precoding matrix of the indicated antenna port should be assumed to be a unit matrix scaled by $\dfrac{1}{\sqrt{v}}$ . For

rank $v$=1,2,...,P, CQIs are respectively calculated, and a best CQI and corresponding rank indicator are selected to report to the network device.

It can be seen from the above embodiment that antenna ports for calculating a CQI/RI associated with the sub-configurations in the CSI report configuration in the network energy-saving scenario are determined, thereby achieving a non-PMI CSI reporting function in the network energy-saving scenario.

Embodiments of a third aspect

The embodiments of this disclosure provide a capability reporting method, which shall be described from a terminal equipment side. FIG. 6 is a schematic diagram of the capability reporting method of the embodiments of this disclosure. As shown in FIG. 6, the method includes:

601: the terminal equipment transmits capability information to a network device, wherein the capability information is used to indicate whether the terminal equipment supports or does not support being configured with non-PMI antenna port indication information, and/or supports or does not support non-PMI CSI feedback, and/or supports or does not support being configured with a list of sub-configurations.

In some embodiments, the capability information may be information of 1 bit, and when a value of the bit is 1, it indicates that the terminal equipment supports being configured with the non-PMI antenna port indication information, and/or supports non-PMI CSI feedback, and/or supports being configured with the list of sub-configurations, when the value of the bit is 0, it indicates that the terminal equipment does not support being configured with the non-PMI antenna port indication information, and/or does not support non-PMI CSI feedback, and/or does not support being configured with the list of sub-configurations, and vice versa, and the embodiments of this disclosure are not limited thereto.

In some embodiments, when the capability information indicates that the terminal equipment supports being configured with the non-PMI antenna port indication information, and/or supports non-PMI (non-PMI) CSI feedback, and/or supports being configured with the list of sub-configurations, the method of the embodiments of the second aspect may be executed, and when the capability information indicates that the terminal equipment does not support being configured with the non-PMI antenna port indication information, and/or does not support non-PMI (non-PMI) CSI feedback, and/or does not support being configured with the list of sub-configurations, the method of the embodiments of the first aspect may be executed, and this disclosure is not limited thereto.

The embodiments of this disclosure may be implemented in combination with the embodiments of the first aspect, or may be implemented separately, and the embodiments of this disclosure may be implemented in combination with the embodiments of the second aspect, or may be implemented separately, which shall not be enumerated herein any further.

Embodiments of a fourth aspect

The embodiments of this disclosure provide a method for indicating a channel state information report configuration, which shall be described from a network device side. The embodiments of the fourth aspect may be combined with the embodiments of the first aspect, and contents identical to those in the embodiments of the first aspect shall not be repeated herein any further.

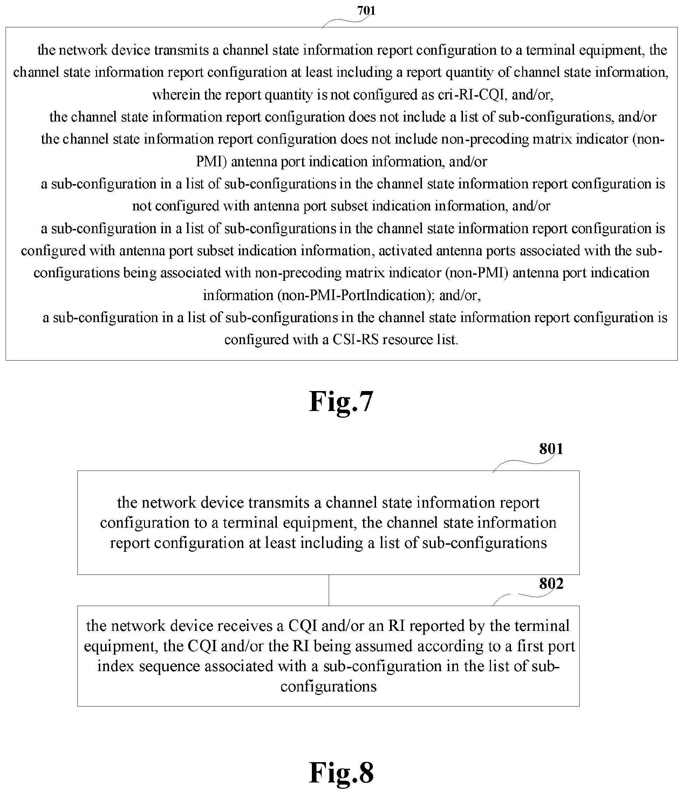

FIG. 7 is a schematic diagram of the method for indicating a channel state information report configuration of the embodiments of this disclosure. As shown in FIG. 7, the method includes:

701: the network device transmits a channel state information report configuration to a terminal equipment, the channel state information report configuration at least including a report quantity of channel state information, wherein the report quantity is not configured as cri-RI-CQI, and/or,

the channel state information report configuration does not include a list of sub-configurations, and/or

the channel state information report configuration does not include non-precoding matrix indicator (non-PMI) antenna port indication information, and/or

a sub-configuration in a list of sub-configurations in the channel state information report configuration is not configured with antenna port subset indication information, and/or

a sub-configuration in a list of sub-configurations in the channel state information report configuration is configured with antenna port subset indication information, activated antenna ports associated with the sub-configurations being associated with non-precoding matrix indicator (non-PMI) antenna port indication information (non-PMI-PortIndication); and/or,

a sub-configuration in a list of sub-configurations in the channel state information report configuration is configured with a CSI-RS resource list.

Reference may be made to the embodiments of the first aspect for implementation of the report configuration, which shall not be repeated herein any further. The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiments that in the network energy-saving scenario, the network device limits the terminal equipment in performing non-PMI CSI feedback in a configuration mode of CSI report quantity, or, the non-PMI CSI feedback is inapplicable to the network energy-saving scenario (is configured with the list of sub-configurations or the sub-configurations are configured with antenna port subset indication information), thereby ensuring that the terminal equipment normally feeds back CSI in the network energy-saving scenario.

Embodiments of a fifth aspect

The embodiments of this disclosure provide a method for indicating a channel state information report configuration, which shall be described from a network device side. The embodiments of the fifth aspect may be combined with the embodiments of the second aspect, and contents identical to those in the embodiments of the second aspect shall not be repeated herein any further.

FIG. 8 is a schematic diagram of the method for indicating a channel state information report configuration of the embodiments of this disclosure. As shown in FIG. 8, the method includes:

801: the network device transmits a channel state information report configuration to a terminal equipment, the channel state information report configuration at least including a list of sub-configurations; and
802: the network device receives a CQI and/or an RI reported by the terminal equipment, the CQI and/or the RI being assumed according to a first port index sequence associated with a sub-configuration in the list of sub-configurations.

In some embodiments, the method may further include: the network device transmits first indication information to the terminal equipment, wherein the first indication information is associated with the sub-configuration, and the first indication information is used to indicate that v antenna port(s) in an antenna port subset associated with the sub-configuration serve(s) as v antenna port(s) of a rank v in the first port index sequence.

Reference may be made to the embodiments of second aspect for implementations of the above steps, which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiment that antenna ports for calculating a CQI/RI associated with the sub-configuration in the CSI report configuration in the network energy-saving scenario are determined, thereby achieving a non-PMI CSI reporting function in the network energy-saving scenario.

Embodiments of a sixth aspect

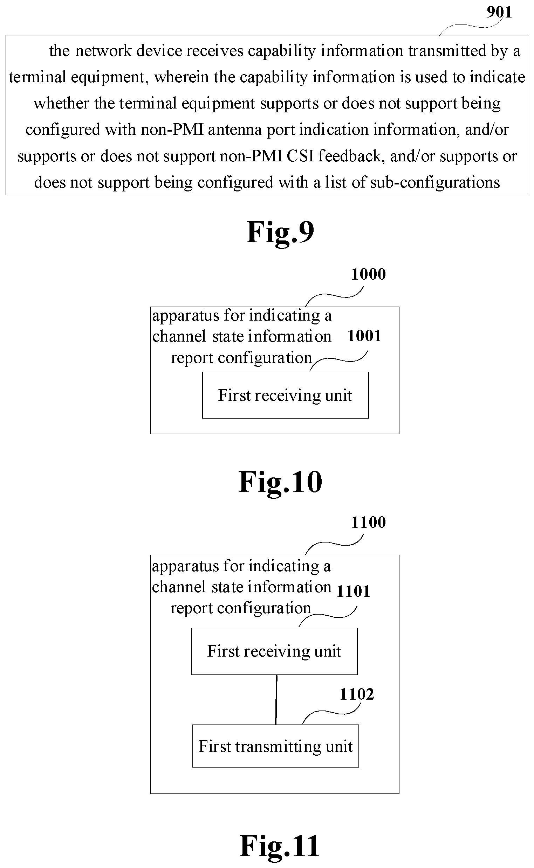

The embodiments of this disclosure provide a capability reporting method, which shall be described from a network device side. FIG. 9 is a schematic diagram of the capability reporting method of the embodiments of this disclosure. As shown in FIG. 9, the method includes:
901: the network device receives capability information transmitted by a terminal equipment, wherein the capability information is used to indicate whether the terminal equipment supports or does not support being configured with non-PMI antenna port indication information, and/or supports or does not support non-PMI CSI feedback, and/or supports or does not support being configured with a list of sub-configurations.

Reference may be made to the embodiments of third aspect for an implementation of the capability information, which shall not be repeated herein any further.

The embodiments of this disclosure may be implemented in combination with the embodiments of the fourth aspect, or may be implemented separately, and the embodiments of this disclosure may be implemented in combination with the embodiments of the fifth aspect, or may be implemented separately, which shall not be enumerated herein any further.

Embodiments of a seventh aspect

The embodiments of this disclosure provide an apparatus for indicating a channel state information report configuration. The apparatus may be, for example, a terminal equipment, or may be one or some components or assemblies configured in the terminal equipment.

FIG. 10 is a schematic diagram of the apparatus for indicating a channel state information report configuration of the embodiments of this disclosure. As shown in FIG. 10, the apparatus 1000 for indicating a channel state information report configuration includes:

a first receiving unit 1001 configured to receive a channel state information report configuration from a network device, the channel state information report configuration at least including a report quantity of channel state information, wherein the report quantity is not configured as cri-RI-CQI, and/or,
the channel state information report configuration does not include a list of sub-configurations, and/or,
the channel state information report configuration does not include non-precoding matrix indicator (non-PMI) antenna port indication information.

Or,

a first receiving unit 1001 configured to receive a channel state information report configuration from a network device, the channel state information report configuration at least including a report quantity of channel state information,

wherein the channel state information report configuration does not include a list of sub-configurations, and/or, the channel state information report configuration does not include non-precoding matrix indicator (non-PMI) antenna port indication information.

a sub-configuration in a list of sub-configurations in the channel state information report configuration is not configured with antenna port subset indication information, and/or,

a sub-configuration in a list of sub-configurations in the channel state information report configuration is configured with antenna port subset indication information, an activated antenna port associated with a sub-configuration being associated with non-precoding matrix indicator (non-PMI) antenna port indication information (non-PMI-PortIndication); and/or,

a sub-configuration in a list of sub-configurations in the channel state information report configuration is configured with a CSI-RS resource list.

Reference may be made to the embodiments of the first aspect for an implementation of the report configuration, which shall not be repeated herein any further.

FIG. 11 is a schematic diagram of the apparatus for indicating a channel state information report configuration of the embodiments of this disclosure. As shown in FIG. 11, the apparatus 1100 for indicating a channel state information report configuration includes:

a first receiving unit 1101 configured to receive a channel state information report configuration from a network device, the channel state information report configuration at least including a list of sub-configurations; and

a first transmitting unit 1102 configured to calculate a CQI and/or an RI according to a first port index sequence and report the CQI and/or the RI, the first port index sequence being associated with a sub-configuration in the list of sub-configurations.

Reference may be made to the embodiments of the second aspect for an implementation of the apparatus 1100, which shall not be repeated herein any further.

It can be seen from the above embodiment that in the network energy-saving scenario, the network device limits the terminal equipment in performing non-PMI CSI feedback in a configuration mode of CSI report quantity, or, the non-PMI CSI feedback is inapplicable to the network energy-saving scenario (is configured with the list of sub-configurations or the sub-configurations are configured with antenna port subset indication information), thereby ensuring that the terminal equipment normally feeds back CSI in the network energy-saving scenario.

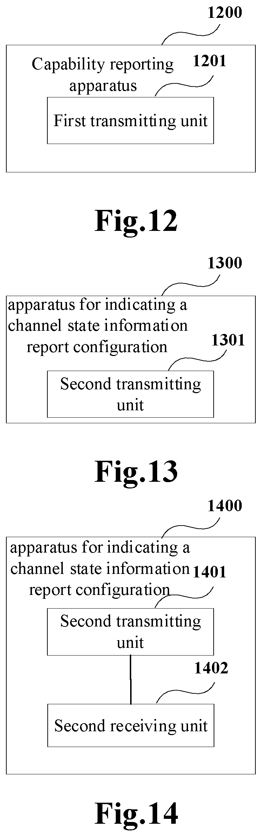

FIG. 12 is a schematic diagram of a capability reporting apparatus of the embodiments of this disclosure. As shown in FIG. 12, the capability reporting apparatus 1200 includes:

a first transmitting unit 1201 configured to transmit capability information to a network device, wherein the capability information is used to indicate whether a terminal equipment supports or does not support being configured with non-PMI antenna port indication information, and/or supports or does not support non-PMI CSI feedback, and/or supports or does not support being configured with a list of sub-configurations.

Reference may be made to the embodiments of the third aspect for an implementation of the capability information, which shall not be repeated herein any further.

It should be noted that the components or modules associated with this disclosure are only described above. However, this disclosure is not limited thereto, and the apparatuses 1000, 1100 and 1200 may further include other components or modules, and reference may be made to related techniques for particulars of these components or modules.

Furthermore, for the sake of simplicity, connection relationships between the components or modules or signal profiles thereof are only illustrated in FIGs. 10-12. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

Embodiments of an eighth aspect

The embodiments of this disclosure provide an apparatus for indicating a channel state information report configuration. The apparatus may be, for example, a network device, or may be one or some components or assemblies configured in the network device.

FIG. 13 is a schematic diagram of the apparatus for indicating a channel state information report configuration of the embodiments of this disclosure. As shown in FIG. 13, the apparatus 1300 for indicating a channel state information report configuration includes:

a second transmitting unit 1301 configured to transmit a channel state information report configuration to a terminal equipment, the channel state information report configuration at least including a report quantity of channel state information,

wherein the report quantity is not configured as cri-RI-CQI, and/or,

the channel state information report configuration does not comprise a list of sub-configurations, and/or,

the channel state information report configuration does not include non-precoding matrix indicator (non-PMI) antenna port indication information, and/or,

a sub-configuration in a list of sub-configurations in the channel state information report configuration is not configured with antenna port subset indication information, and/or,

a sub-configuration in a list of sub-configurations in the channel state information report configuration is configured with antenna port subset indication information, an activated antenna port associated with a sub-configuration being associated with non-precoding matrix indicator (non-PMI) antenna port indication information (non-PMI-PortIndication); and/or,

a sub-configuration in a list of sub-configurations in the channel state information report configuration is configured with a CSI-RS resource list.

Reference may be made to the embodiments of the first aspect for an implementation of the report configuration, which shall not be repeated herein any further.

FIG. 14 is a schematic diagram of the apparatus for indicating a channel state information report configuration of the embodiments of this disclosure. As shown in FIG. 14, the apparatus 1400 for indicating a channel state information report configuration includes:

a second transmitting unit 1401 configured to transmit a channel state information report configuration to a terminal equipment, the channel state information report configuration at least including a list of sub-configurations; and

a second receiving unit 1402 configured to receive a CQI and/or an RI reported by the terminal equipment, the CQI and/or the RI being assumed according to a first port index sequence associated with a sub-configuration in the list of sub-configurations.

Reference may be made to the embodiments of the first aspect for an implementation of the apparatus 1400, which shall not be repeated herein any further.

It can be seen from the above embodiment that the antenna ports for calculating a CQI/RI associated with a sub-configuration in the CSI report configuration in the network energy-saving scenario are determined, thereby achieving a non-PMI CSI reporting function in the network energy-saving scenario.

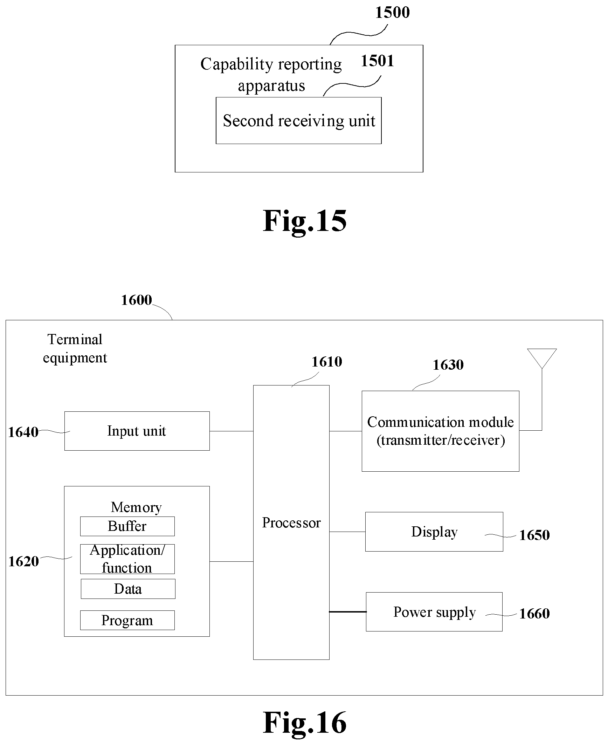

FIG. 15 is a schematic diagram of a capability reporting apparatus of the embodiments of this disclosure. As shown in FIG. 15, the capability reporting apparatus 1500 includes:

a second receiving unit 1501 configured to receive capability information transmitted by a terminal equipment, wherein the capability information is used to indicate whether the terminal equipment supports or does not support being configured with non-PMI antenna port indication information, and/or supports or does not support non-PMI CSI feedback, and/or supports or does not support being configured with a list of sub-configurations.

Reference may be made to the embodiments of the third aspect for an implementation of the capability information, which shall not be repeated herein any further.

It should be noted that the components or modules associated with this disclosure are only described above. However, this disclosure is not limited thereto, and the apparatuses 1300, 1400 and 1500 may further include other components or modules, and reference may be made to related techniques for particulars of these components or modules.

Furthermore, for the sake of simplicity, connection relationships between the components or modules or signal profiles thereof are only illustrated in FIGs. 13-15. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

Embodiments of a ninth aspect

The embodiments of this disclosure provide a communication system, and reference may be made to FIG. 1, with contents identical to those in the embodiments of the first to the sixth aspects being not going to be described herein any further.

In some embodiments, the communication system 100 may at least include:

a network device, including the apparatus for indicating a channel state information report configuration and/or the capability reporting apparatus in the embodiments of the eighth aspect; and/or,

a terminal equipment, including the apparatus for indicating a channel state information report configuration and/or the capability reporting apparatus in the embodiments of the seventh aspect.

The embodiments of this disclosure further provide a terminal equipment; however, this disclosure is not limited thereto, and it may also be another equipment.

FIG. 16 is a schematic diagram of the terminal equipment of the embodiments of this disclosure. As shown in FIG. 16, the terminal equipment may include a processor 1610 and a memory 1620, the memory 1620 storing data and a program and being coupled to the processor 1610. It should be noted that this figure is illustrative only, and other types of structures may also be used, so as to supplement or replace this structure and achieve a telecommunications function or other functions.

For example, the processor 1610 may be configured to execute a program to carry out the method in any one of the embodiments of the first to the third aspects.

As shown in FIG. 16, the terminal equipment 1600 may further include a communication module 1630, an input unit 1640, a display 1650, and a power supply 1660; wherein functions of the above components are similar to those in the related art, which shall not be described herein any further. It should be noted that the terminal equipment 1600 does not necessarily include all the parts shown in FIG. 16, and the above components are not necessary. Furthermore, the terminal equipment 1600 may include parts not shown in FIG. 16, and the related art may be referred to.

The embodiments of this disclosure further provide a network device, which may be, for example, a base station. However, this disclosure is not limited thereto, and it may also be another network device.

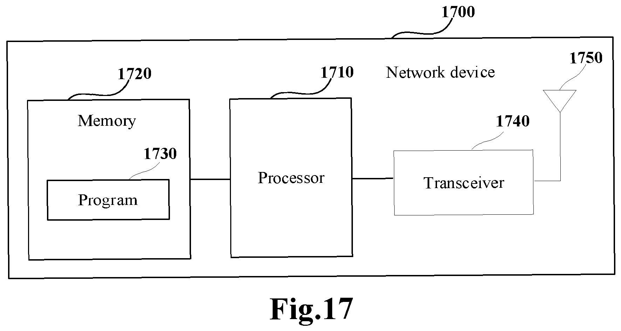

FIG. 17 is a schematic diagram of a structure of the network device of the embodiments of this disclosure. As shown in FIG. 17, the network device 1700 may include a processor 1710 (such as a central processing unit (CPU)) and a memory 1720, the memory 1720 being coupled to the processor 1710. Wherein, the memory 1720 may store various data, and furthermore, it may store a program 1730 for information processing, and execute the program 1730 under control of the processor 1710.

For example, the processor 1710 may be configured to execute a program to carry out the method in any one of the embodiments of the fourth to the sixth aspects.

Furthermore, as shown in FIG. 17, the network device 1700 may include a transceiver 1740, and an antenna 1750, etc. Wherein, functions of the above components are similar to those in the related art, and shall not be described herein any further. It should be noted that the network device 1700 does not necessarily include all the parts shown in FIG. 17, and furthermore, the network device 1700 may include parts not shown in FIG. 17, and the related art may be referred to.

Embodiments of this disclosure provide a computer program, which, when executed in a terminal equipment, will cause the terminal equipment to carry out the methods as described in the embodiments of the first to the third aspects.

Embodiments of this disclosure provide a storage medium, storing a computer program, which will cause a terminal equipment to carry out the methods as described in the embodiments of the first to the third aspects.

Embodiments of this disclosure provide a computer program, which, when executed in a network device, will cause the network device to carry out the methods as described in the embodiments of the second to the fourth aspects.

Embodiments of this disclosure provide a storage medium, storing a computer readable program, which will cause a network device to carry out the methods as described in the embodiments of the second to the fourth aspects.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.

As to implementations containing the above embodiments, following supplements are further disclosed.

1. An apparatus for indicating a channel state information report configuration, including:

a second transmitting unit configured to transmit a channel state information report configuration to a terminal equipment, the channel state information report configuration at least including a list of sub-configurations; and a second receiving unit configured to receive a CQI and/or an RI reported by the terminal equipment, the CQI and/or the RI being assumed according to a first port index sequence associated with a sub-configuration in the list of sub-configurations.

2. The apparatus according to supplement 1, wherein the second transmitting unit further transmits first indication information to the terminal equipment, wherein the first indication information is associated with the sub-configuration, and the first indication information is used to indicate that v antenna port(s) in the antenna port subset associated with the sub-configuration serve(s) as v antenna port(s) of a rank v in the first port index sequence.

3. A capability reporting apparatus, including:

a second receiving unit configured to receive capability information transmitted by a terminal equipment, wherein the capability information is used to indicate whether the terminal equipment supports or does not support being configured with non-PMI antenna port indication information, and/or supports or does not support non-PMI CSI feedback, and/or supports or does not support being configured with a list of sub-configurations.

4. A capability reporting apparatus, including:

a first transmitting unit configured to transmit capability information to a network device, wherein the capability information is used to indicate whether the terminal equipment supports or does not support being configured with non-PMI antenna port indication information, and/or supports or does not support non-PMI CSI feedback, and/or supports or does not support being configured with a list of sub-configurations.

5. A communication system, characterized in that the communication system includes the apparatus as described in supplement 4 and/or the apparatus as described in supplement 1 or 4.

## Claims

1. An apparatus for indicating a channel state information report configuration, comprising:

a first receiving unit configured to receive a channel state information report configuration from a network device, the channel state information report configuration at least comprising a report quantity of channel state information, wherein the report quantity is not configured as cri-RI-CQI, and/or, the channel state information report configuration does not comprise non-precoding matrix indicator (non-PMI) antenna port indication information (non-PMI-PortIndication).

2. The apparatus according to claim 1, wherein the channel state information report configuration further comprises a list of sub-configurations; and the report quantity is not configured as the cri-RI-CQI, and/or the channel state information report configuration does not comprise the non-precoding matrix indicator antenna port indication information.

**3.** The apparatus according to claim 1, wherein the channel state information report configuration further comprises a list of sub-configurations and antenna port subset indication information corresponding to a sub-configuration in the list of sub-configurations;

and the report quantity is not configured as the cri-RI-CQI, and/or the channel state information report configuration does not comprise the non-precoding matrix indicator antenna port indication information.

**4.** The apparatus according to claim 1, wherein the channel state information report configuration further comprises a list of sub-configurations;

and the report quantity is configured as 'cri-RI-LI-PMI-CQI' or 'cri-RI-i1' or 'cri-RI-i1-CQI' or 'cri-RI-LI-PMI-CQI'.

**5.** The apparatus according to claim 1, wherein the channel state information report configuration further comprises a list of sub-configurations and antenna port subset indication information corresponding to a sub-configuration in the list of sub-configurations;

and the report quantity is configured as 'cri-RI-LI-PMI-CQI' or 'cri-RI-i1' or 'cri-RI-i1-CQI' or 'cri-RI-LI-PMI-CQI'.

**6.** An apparatus for indicating a channel state information report configuration, comprising:

a first receiving unit configured to receive a channel state information report configuration from a network device, the channel state information report configuration at least comprising a report quantity of channel state information;

wherein the channel state information report configuration does not comprise a list of sub-configurations, and/or, a sub-configuration in a list of sub-configurations in the channel state information report configuration is not configured with antenna port subset indication information, the antenna port subset indication information being used to indicate an activated antenna port associated with the sub-configuration; and/or,

a sub-configuration in a list of sub-configurations in the channel state information report configuration is configured with antenna port subset indication information, the antenna port subset indication information being used to indicate an activated antenna port associated with the sub-configuration, an activated antenna port associated with a sub-configuration being associated with non-precoding matrix indicator (non-PMI) antenna port indication information (non-PMI-PortIndication); and/or,

a sub-configuration in a list of sub-configurations in the channel state information report configuration is configured with a CSI-RS (channel state information reference signal) resource list.

**7.** The apparatus according to claim 6, wherein the report quantity is configured as cri-RI-CQI and/or the channel state information report configuration further comprises the non-PMI antenna port indication information;

and the channel state information report configuration does not comprise the list of sub-configurations.

**8.** The apparatus according to claim 6, wherein the report quantity is configured as cri-RI-CQI and/or the channel state information report configuration further comprises the non-PMI antenna port indication information, and the channel state information report configuration further comprises the list of sub-configurations;

and a sub-configuration in the list of sub-configurations is not configured with antenna port subset indication information; or, a sub-configuration in the list of sub-configurations is configured with a CSI-RS resource list; or, the sub-configuration is configured with antenna port subset indication information, and an activated antenna port associated with a sub-configuration being associated with non-precoding matrix indicator (non-PMI) antenna port indication information (non-PMI-PortIndication).

**9.** The apparatus according to claim 1 or 6, wherein the apparatus further comprises:

a first transmitting unit configured to transmit capability information to the network device, the capability information being used to indicate thata terminal equipment supports or does not support being configured with the non-PMI antenna port indication information, and/or,

supports or does not support non-PMI CSI feedback, and/or,

supports or does not support being configured with a list of sub-configurations.

**10.** An apparatus for indicating a channel state information report configuration, applicable to a terminal equipment, the apparatus comprising:

a first receiving unit configured to receive a channel state information report configuration from a network device, the channel state information report configuration at least comprising a list of sub-configurations; and

a first transmitting unit configured to calculate a CQI (channel quality indicator) and/or an RI (rank indicator) according to a first port index sequence and report the CQI and/or the RI, the first port index sequence being associated with a sub-configuration in the list of sub-configurations.

11. The apparatus according to claim 10, wherein the report configuration further comprises a report quantity, the report quantity being configured as cri-RI-CQI.

12. The apparatus according to claim 10, wherein the first receiving unit is further configured to receive a CSI-RS resource configuration, and the report configuration further comprises antenna port subset indication information corresponding to a sub-configuration in the list of sub-configurations, the antenna port subset indication information being used to indicate an antenna port subset associated with the sub-configuration, and an antenna port in the antenna port subset being an activated antenna port in antenna ports configured in a CSI-RS resource configuration for channel measurement associated with the report configuration.

13. The apparatus according to any one of claims 10-12, wherein the first port index sequence at least comprises $v$ antenna port index/indices of a rank $v$; where, $v$ is a positive integer greater than 0, and a maximum value of $v$ is a total number of antenna ports in an antenna port subset associated with the sub-configuration.

14. The apparatus according to claim 12, wherein the first port index sequence is indicated by RRC signaling and/or is assumed in a predefined manner.

15. The apparatus according to claim 14, wherein the RRC signaling comprises first indication information, wherein the first indication information is associated with a sub-configuration, and the first indication information is used to indicate that $v$ antenna port(s) in an antenna port subset associated with the sub-configuration serve(s) as $v$ antenna port(s) of a rank $v$ in the first port index sequence.

16. The apparatus according to claim 14, wherein according to a predefined manner, $v$ antenna port(s) of a rank $v$ in the first port index sequence is/are assumed to be former $v$ antenna port(s) arranged in an order of an port index from small to large in an antenna port subset associated with the sub-configuration.

17. The apparatus according to claim 10, wherein the first transmitting unit calculates a CQI of a rank $v$ by using $v$ antenna port(s) of the rank $v$ in the first port index sequence.

18. The apparatus according to claim 10, wherein the first transmitting unit further transmits capability information to the network device, the capability information being used to indicate that the terminal equipment supports being configured with non-PMI antenna port indication information and/or supports non-PMI CSI feedback and/or supports being configured with the list of sub-configurations.

19. An apparatus for indicating a channel state information report configuration, comprising:

a second transmitting unit configured to transmit a channel state information report configuration to a terminal equipment, the channel state information report configuration at least comprising a report quantity of channel state information, wherein the report quantity is not configured as cri-RI-CQI, and/or, the channel state information report configuration does not comprise non-precoding matrix indicator (non-PMI) antenna port indication information.

20. An apparatus for indicating a channel state information report configuration, comprising:

a second transmitting unit configured to transmit a channel state information report configuration to a terminal equipment, the channel state information report configuration at least comprising a report quantity of channel state information, wherein the channel state information report configuration does not comprise a list of sub-configurations, and/or, a sub-configuration in a list of sub-configurations in the channel state information report configuration is not configured with antenna port subset indication information, the antenna port subset indication information being used to indicate an activated antenna port associated with the sub-configuration; and/or, a sub-configuration in a list of sub-configurations in the channel state information report configuration is configured with antenna port subset indication information, the antenna port subset indication information being used to indicate an activated antenna port associated with the sub-configuration, an activated antenna port associated with a sub-configuration being associated with non-precoding matrix indicator (non-PMI) antenna port indication information (non-PMI-PortIndication); and/or,

a sub-configuration in a list of sub-configurations in the channel state information report configuration is configured with a CSI-RS resource list.

**100**

**101**

**103**

**102**

# Fig.1

**201**

the terminal equipment receives a channel state information report configuration from a network device, the channel state information report configuration at least including a report quantity of channel state information, wherein the report quantity is not configured as cri-RI-CQI, and/or, the channel state information report configuration does not include a list of sub-configurations, and/or, the channel state information report configuration does not include non-precoding matrix indicator (non-PMI) antenna port indication information (non-PMI-PortIndication), and/or, a sub-configuration in a list of sub-configurations in the channel state information report configuration is not configured with antenna port subset indication information; and/or, a sub-configuration in a list of sub-configurations in the channel state information report configuration is configured with antenna port subset indication information, an activated antenna port associated with a sub-configuration being associated with non-precoding matrix indicator (non-PMI) antenna port indication information (non-PMI-PortIndication); and/or, a sub-configuration in a list of sub-configurations in the channel state information report configuration is configured as a CSI-RS resource list.

# Fig.2

301

> the terminal equipment receives a channel state information report configuration from a network device, the channel state information report configuration at least including a report quantity of channel state information, wherein the report quantity is not configured as cri-RI-CQI, and/or, the channel state information report configuration does not include non-precoding matrix indicator (non-PMI) antenna port indication information (non-PMI-PortIndication)

# Fig.3

401

> the terminal equipment receives a channel state information report configuration from a network device, the channel state information report configuration at least including a report quantity of channel state information, wherein the channel state information report configuration does not include a list of sub-configurations, and/or, the channel state information report configuration includes a list of sub-configurations, a sub-configuration in the list of sub-configurations being not configured with antenna port subset indication information, and/or, the channel state information report configuration includes a list of sub-configurations, a sub-configuration in the list of sub-configurations being configured with a CSI-RS resource list, and/or, a sub-configuration in a list of sub-configurations in the channel state information report configuration is configured with antenna port subset indication information, the antenna port subset indication information being used to indicate an activated antenna port associated with the sub-configuration, an activated antenna port associated with the sub-configuration being associated with non-PMI antenna port indication information (non-PMI-PortIndication).

# Fig.4

501

the terminal equipment receives a channel state information report configuration from a network device, the channel state information report configuration at least including a list of sub-configurations

502

the terminal equipment calculates a CQI and/or an RI according to a first port index sequence, and reports the CQI and/or the RI, the first port index sequence being associated with a sub-configuration in the list of sub-configurations

# Fig.5

601

the terminal equipment transmits capability information to a network device, wherein the capability information is used to indicate whether the terminal equipment supports or does not support being configured with non-PMI antenna port indication information, and/or supports or does not support non-PMI CSI feedback, and/or supports or does not support being configured with a list of sub-configurations.

# Fig.6

701

the network device transmits a channel state information report configuration to a terminal equipment, the channel state information report configuration at least including a report quantity of channel state information, wherein the report quantity is not configured as cri-RI-CQI, and/or,

the channel state information report configuration does not include a list of sub-configurations, and/or

the channel state information report configuration does not include non-precoding matrix indicator (non-PMI) antenna port indication information, and/or

a sub-configuration in a list of sub-configurations in the channel state information report configuration is not configured with antenna port subset indication information, and/or

a sub-configuration in a list of sub-configurations in the channel state information report configuration is configured with antenna port subset indication information, activated antenna ports associated with the sub-configurations being associated with non-precoding matrix indicator (non-PMI) antenna port indication information (non-PMI-PortIndication); and/or,

a sub-configuration in a list of sub-configurations in the channel state information report configuration is configured with a CSI-RS resource list.

## Fig.7

801

the network device transmits a channel state information report configuration to a terminal equipment, the channel state information report configuration at least including a list of sub-configurations

802

the network device receives a CQI and/or an RI reported by the terminal equipment, the CQI and/or the RI being assumed according to a first port index sequence associated with a sub-configuration in the list of sub-configurations

## Fig.8

901

the network device receives capability information transmitted by a terminal equipment, wherein the capability information is used to indicate whether the terminal equipment supports or does not support being configured with non-PMI antenna port indication information, and/or supports or does not support non-PMI CSI feedback, and/or supports or does not support being configured with a list of sub-configurations

# Fig.9

1000

apparatus for indicating a channel state information  1001
report configuration

First receiving unit

# Fig.10

1100

apparatus for indicating a channel state information  1101
report configuration

First receiving unit

1102

First transmitting unit

# Fig.11

1200

Capability reporting    1201
apparatus

First transmitting unit

**Fig.12**

1300

apparatus for indicating a
channel state information
report configuration    1301

Second transmitting
unit

**Fig.13**

1400

apparatus for indicating a
channel state information 1401
report configuration

Second transmitting
unit

1402

Second receiving unit

**Fig.14**

**1500**

Capability reporting **1501**
apparatus

Second receiving unit

**Fig.15**

**1600**

Terminal
equipment

**1610**          **1630**

**1640** — Input unit

Communication module
(transmitter/receiver)

Memory
Buffer
Application/
function
Data
Program

**1620**

Processor

Display — **1650**

Power supply — **1660**

**Fig.16**

1700

Network device

1720

1710

1750

Memory

1730

Program

Processor

1740

Transceiver

**Fig.17**

## INTERNATIONAL SEARCH REPORT

| International application No. |
|---|
| **PCT/CN2023/122938** |

### A. CLASSIFICATION OF SUBJECT MATTER

H04B7/0456(2017.01)i

According to International Patent Classification (IPC) or to both national classification and IPC

### B. FIELDS SEARCHED

Minimum documentation searched (classification system followed by classification symbols)

IPC:H04B H04W H04L

Documentation searched other than minimum documentation to the extent that such documents are included in the fields searched

Electronic data base consulted during the international search (name of data base and, where practicable, search terms used)

3GPP, ENTXT, CNTXT, DWPI: 信道状态信息, 配置, 预编码矩阵, 报告, 上报, 子配置, 天线, 端口, CQI, CRI, CSI, RI, non, PMI, quantity, sub, report, calculat+, comput+, port+, config+

### C. DOCUMENTS CONSIDERED TO BE RELEVANT

| Category* | Citation of document, with indication, where appropriate, of the relevant passages | Relevant to claim No. |
|---|---|---|
| X | MODERATOR (QUALCOMM INC.). "Summary of [107-e-NR-7.1CRs-12] Discussion on UCI Bitwidth and UCI Mapping for Non-PMI CSI Feedback" *3GPP TSG RAN WG1 #107-e, R1-2112772*, 19 November 2021 (2021-11-19), pages 3-4 and 9, Nokia opinion and page 6, tables 6.3.1.1.2-7 | 1-20 |
| A | CN 112514276 A (FRAUNHOFER-GESELLSCHAFT ZUR FÖRDERUNG DER ANGEWANDTEN FORSCHUNG E. V.) 16 March 2021 (2021-03-16) entire document | 1-20 |
| A | WO 2013191503 A1 (SAMSUNG ELECTRONICS CO., LTD.) 27 December 2013 (2013-12-27) entire document | 1-20 |
| A | ERICSSON. "Miscellaneous Corrections and Clarifications on CSI Acquisition" *3GPP TSG RAN WG1 Meeting #92bis, R1-1804979*, 20 April 2018 (2018-04-20), entire document | 1-20 |
| A | ERICSSON. "Corrections and Clarifications for CSI Measurement" *3GPP TSG RAN WG1 Meeting #93, R1-1806215*, 25 May 2018 (2018-05-25), entire document | 1-20 |

☐ Further documents are listed in the continuation of Box C.      ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 June 2024** | **20 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/122938**

| Patent document cited in search report | | | Publication date (day/month/year) | Patent family member(s) | | | Publication date (day/month/year) |
|---|---|---|---|---|---|---|---|
| CN | 112514276 | A | 16 March 2021 | EP | 3804157 | A1 | 14 April 2021 |
| | | | | JP | 2021525988 | A | 27 September 2021 |
| | | | | US | 2023208494 | A1 | 29 June 2023 |
| | | | | KR | 20210014698 | A | 09 February 2021 |
| | | | | EP | 3576312 | A1 | 04 December 2019 |
| | | | | US | 2021143885 | A1 | 13 May 2021 |
| | | | | WO | 2019229152 | A1 | 05 December 2019 |
| | | | | EP | 4250583 | A2 | 27 September 2023 |
| | | | | WO | 2020052736 | A1 | 19 March 2020 |
| | | | | CN | 112997418 | A | 18 June 2021 |
| | | | | KR | 2021076905 | A | 24 June 2021 |
| | | | | EP | 3850761 | A1 | 21 July 2021 |
| | | | | US | 2021226674 | A1 | 22 July 2021 |
| | | | | JP | 2021536187 | W | 23 December 2021 |
| WO | 2013191503 | A1 | 27 December 2013 | KR | 20150031242 | A | 23 March 2015 |
| | | | | US | 2013343299 | A1 | 26 December 2013 |
| | | | | EP | 2865107 | A1 | 29 April 2015 |

Form PCT/ISA/210 (patent family annex) (July 2022)